# EUROPEAN PATENT APPLICATION

(11) **EP 4 539 306 A1**
(43) Date of publication of application: **16.04.2025**
(21) Application number: 24203797.6
(22) Date of filing: 01.10.2024
(51) Int. Cl.: H02K 5/22

(54) **MOTOR**

(30) Priority: 11.10.2023 JP 2023176128
(71) Applicant: Nidec Instruments Corporation, Nagano 393-8511 (JP)
(72) Inventor: YASU, Ryoma, Suwa-gun, Nagano, 393-8511 (JP)
(74) Representative: Kurig, Thomas

(57) **Abstract**

To reduce a possibility of occurrence of abnormal noise due to vibration when a motor (1) having a structure that a terminal cover (16) is attached to a motor case (11) of the motor (1).

The motor 1 includes the motor case (11) in a cylindrical shape and in which a rotor (7) and a stator (9) are accommodated, the terminal cover (16) which is attached to an outer periphery (2) of the motor case (11), an insertion part (4) provided in the motor case (11), and an inserted part (5) provided in the terminal cover (16). The terminal cover (16) is attached to the motor case (11) in a state that the insertion part (4) of the motor case (11) is press-fitted to the inserted part (5).

## Description

### TECHNICAL FIELD

The present invention relates to a motor, specifically, a motor having a structure that a terminal cover is attached to a motor case.

### BACKGROUND

CN218449655U (Patent Literature 1) is one of prior art documents relating to a motor of this type. In Patent Literature 1, a motor having a structure that a terminal cover is attached to a motor case is disclosed.

In a motor having a structure that a terminal cover is attached to a motor case, there is a case that the motor case and the terminal cover are connected with each other through a clearance. In this case, when a motor is driven and vibration occurs, the vibration is individually transmitted to portions where the motor case and the terminal cover face each other through the clearance and thus, the motor case and the terminal cover are individually vibrated and collided with each other and abnormal noise may occur.

### SUMMARY

In view of the problem described above, an embodiment of the present invention may advantageously provide a motor having a structure that a terminal cover is attached to a motor case, the motor capable of reducing a possibility of occurrence of abnormal noise due to vibration when the motor is driven.

According to an embodiment of the present invention, there may be provided a motor including a motor case in a cylindrical shape and in which a rotor and a stator are accommodated, a terminal cover which is attached to an outer periphery of the motor case, an insertion part which is provided in the motor case, and an inserted part which is provided in the terminal cover. The terminal cover is attached to the motor case in a state that the insertion part of the motor case is press-fitted to the inserted part.

According to this embodiment, the terminal cover is attached to the motor case in a state that the insertion part of the motor case is press-fitted to the inserted part. In other words, the insertion part is press-fitted to the inserted part and thus, vibration of the motor is not individually transmitted to the inserted part and the insertion part, and the inserted part and the insertion part are integrally vibrated and, as a result, a possibility of occurrence of abnormal noise can be reduced. Further, the insertion part is press-fitted to the inserted part and thus, they are firmly contacted with each other by a repulsive force due to the press-fitting. As a result, the terminal cover is held by the motor case with less possibility of displacement.

Further, the present invention may be structured so that, in the motor described above, the inserted part is provided with a root part, which is protruded from a surface of a cover main body of the terminal cover, and an arm part which is extended from a tip end of the root part along the surface of the cover main body so as to be spaced apart from the surface. The arm part is provided so that an interval between a contact surface, which is a tip end part in an extended direction from the root part and contacts with the insertion part, and the surface of the cover main body is set to be a dimension so that the insertion part is press-fitted, and a base end part of the arm part which is connected with the root part faces the insertion part with a gap.

In the expression that "an interval between a contact surface ... and the surface of the cover main body is set to be a dimension so that the insertion part is press-fitted", the phrase "a dimension so that the insertion part is press-fitted" means that an interval between the contact surface and the surface of the cover main body is set to be smaller than a thickness of the insertion part.

According to this embodiment, the arm part is provided with the base end part connected with the root part and the tip end part connected with the base end part. Further, although the contact surface of the tip end part is contacted with the insertion part in a press-fitted state, the base end part faces the insertion part with a gap, and the base end part and the insertion part are not contacted with each other.

If the base end part is also contacted with the insertion part in a press-fitted state similarly to the tip end part, stress due to press-fitting concentrates at a connected portion between the base end part and the root part and the connected portion may be easily damaged. However, in this embodiment, the base end part is not contacted with the insertion part and thus, the stress can be dispersed and relieved to the entire base end part and a possibility of damage of the connected portion can be reduced.

Further, a repulsive force of the arm part due to press-fitting of the insertion part concentrates on the contact surface of the tip end part. Therefore, vibration of the motor is not individually transmitted to the inserted part and the insertion part and thus, the inserted part and the insertion part are further integrally vibrated and, as a result, a possibility of occurrence of abnormal noise can be further reduced.

Further, the present invention may be structured so that, in the motor described above, the base end part is formed in a stepped shape having two stages or more.

According to this embodiment, the base end part is formed in a stepped shape having two stages or more and thus, stress can be dispersed and relieved in comparison with a stepped shape having one stage, and a possibility of damage of the base end part can be further reduced.

Further, the present invention may be structured so that, in the motor described above, the motor case is structured of a pair of a first case and a second case which is joined and integrated with the first case, the insertion part is structured of a first insertion part provided in the first case and a second insertion part provided in the second case, the terminal cover is a single member, the inserted part is structured of a first inserted part to which the first insertion part is inserted and a second inserted part to which the second insertion part is inserted. The first insertion part of the first case is inserted to the first inserted part of the terminal cover which is the single member in a first direction, and the second insertion part of the second case is inserted to the second inserted part of the terminal cover in a second direction which is opposite to the first direction and thereby, the motor case and the terminal cover are integrated with each other.

According to this embodiment, the first insertion part of the first case is inserted to the first inserted part of the terminal cover which is a single member in a first direction, and the second insertion part of the second case is inserted to the second inserted part of the terminal cover in a second direction which is opposite to the first direction and thereby, the motor case and the terminal cover are integrated with each other. As a result, the first case and the second case can be easily attached to the terminal cover which is a single member. In addition, when the first case and the second case are successively fixed to each other as one body, the terminal cover can be held by the motor case with less possibility of displacement.

Further, the present invention may be structured so that, in the motor described above, a length of the arm part of the first inserted part and a length of the arm part of the second inserted part are different from each other.

According to this embodiment, a length of the arm part of the first inserted part and a length of the arm part of the second inserted part are different from each other. As a result, a possibility of occurrence of abnormal noise due to vibration of the motor can be further reduced.

### [Effects of the Invention]

According to the present invention, in a motor having a structure that a terminal cover is attached to a motor case, a possibility of occurrence of abnormal noise due to vibration when the motor is driven can be reduced.

Other features and advantages of the invention will be apparent from the following detailed description, taken in conjunction with the accompanying drawings that illustrate, by way of example, various features of embodiments of the invention.

### BRIEF DESCRIPTION OF THE DRAWINGS

Embodiments will now be described, by way of example only, with reference to the accompanying drawings which are meant to be exemplary, not limiting, and wherein like elements are numbered alike in several Figures, in which:
FIG. 1 is a perspective view showing a principal part of a motor in accordance with a first embodiment of the present invention.
FIG. 2 is a perspective view showing a principal part of the motor in accordance with the first embodiment.
FIG. 3 is a perspective view showing a motor case in accordance with the first embodiment.
FIG. 4 is a rear view showing a terminal cover in accordance with the first embodiment.
FIG. 5 is an exploded perspective view showing the motor case and the terminal cover in accordance with the first embodiment.
FIG. 6 is an enlarged rear view showing a principal part in a state that a second insertion part of a second case is insert into a second inserted part of the terminal cover in accordance with the first embodiment.
FIG. 7 is a perspective view showing a state that a first insertion part of a first case is inserted into a first inserted part of the terminal cover in accordance with the first embodiment.
FIG. 8 is a perspective view showing a state that a second insertion part of a second case is inserted into a second inserted part of the terminal cover in accordance with the first embodiment.

### DETAILED DESCRIPTION

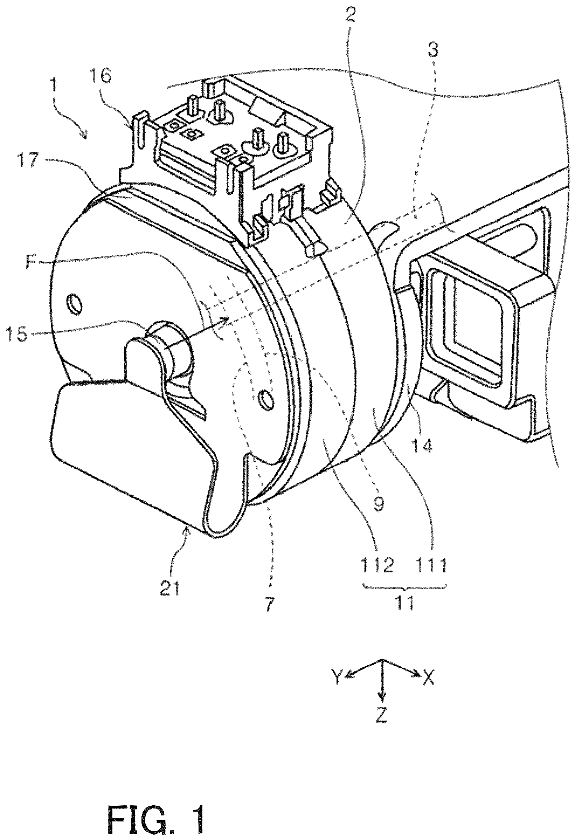

An embodiment of a motor in accordance with the present invention will be described in detail below with reference to FIGs. 1 through 8.

In the following descriptions, three axes perpendicular to each other are respectively defined as an X-axis, a Y-axis and a Z-axis as shown in the respective drawings. Directions of the arrows of three axes (X, Y and Z) are "+" directions of the respective directions and opposite directions are "-" directions. The Z-axis direction corresponds to a vertical direction, i.e., a direction in which gravity acts, and the +Z direction shows a vertical upper side and the -Z direction shows a vertical lower side. The X-axis direction and the Y-axis direction correspond to horizontal directions. The +Y direction shows a front direction of a motor and the - Y direction shows a rear direction of the motor. The +X direction shows a right direction of the motor and the -X direction shows a left direction of the motor.

### [First Embodiment]

A motor 1 in accordance with a first embodiment of the present invention is a stepping motor which slidably moves a head-up display device not shown in an axial direction of a rotation shaft described below. Of course, the motor 1 in the present invention is not limited to a motor which is used to slidably move a head-up display device.

As shown in FIG. 1, the motor 1 in this embodiment includes a motor case 11 in a cylindrical shape and which accommodates a rotor 7 and a stator 9 inside and a terminal cover 16 which is attached to an outer periphery 2 of the motor case 11.

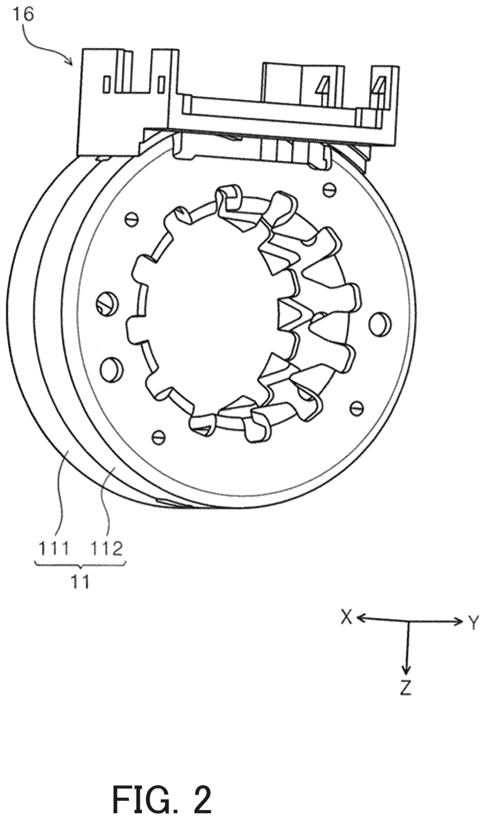

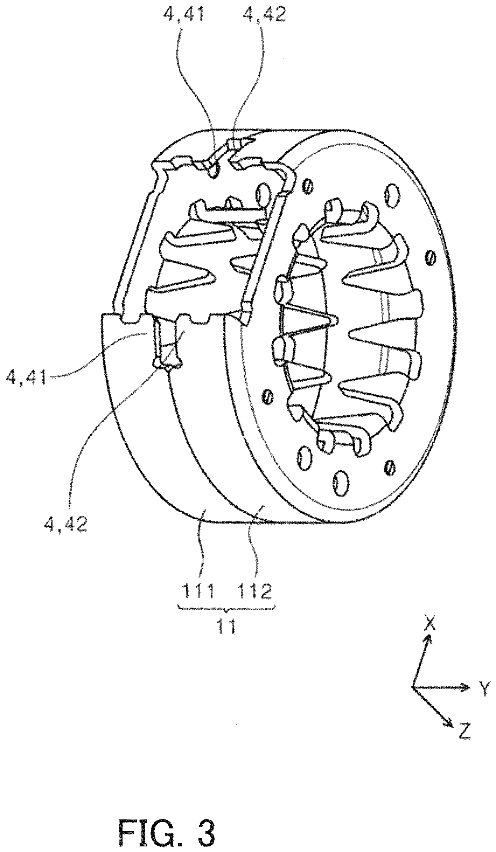

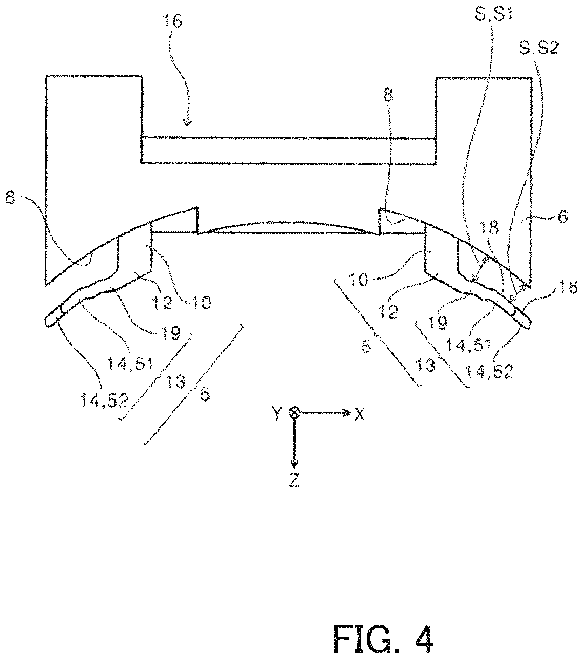

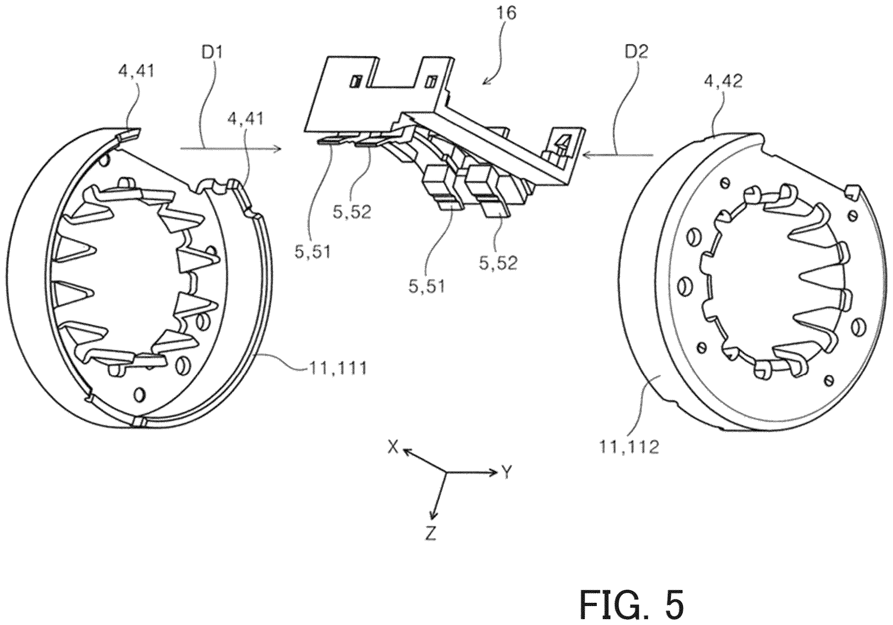

FIG. 2 is a perspective view showing a state that the terminal cover 16 is attached to the motor case 11. FIG. 3 is a perspective view showing the motor case 11, FIG. 4 is a rear view showing the terminal cover 16, and FIG. 5 is an exploded perspective view showing the motor case 11 in FIG. 3 and the terminal cover 16. In these figures, in order to easily understand the drawings, other motor structure members such as the rotor 7 and the stator 9 are not shown. In the respective figures described below, other motor structure members are also not shown.

As shown in FIGs. 3 and 5, insertion parts 4 are provided in the motor case 11. Further, as shown in FIGs. 4 and 5, inserted parts 5 are provided in the terminal cover 16. The terminal cover 16 is attached to the motor case 11 in a state that the insertion parts 4 of the motor case 11 are press-fitted to the inserted parts 5. A structure that the insertion parts 4 are press-fitted to the inserted parts 5 will be described below.

As shown in FIG. 4, a pair of the inserted parts 5 of the terminal cover 16 is provided in a separated manner in the X-axis direction. The pair of the inserted parts 5 is arranged in plane symmetry with respect to the Y-Z plane. As shown in FIG. 3, a pair of the insertion parts 4 of the motor case 11 is provided in a separated manner in the X-axis direction. The pair of the insertion parts 4 is disposed in plane symmetry with respect to the Y-Z plane.

As shown in FIG. 1, the motor 1 includes a bearing 15 which supports one end (+Y side) of a rotation shaft 3 and a plate 17 which is fixed to the motor case 11 and holds the bearing 15. In addition, the motor 1 includes a spring member 21. The spring member 21 is fixed to the plate 17 and applies an elastic force "F" to the bearing 15, which holds one end of the rotation shaft 3, in a direction toward the other end of the rotation shaft 3 (-Y direction).

In this embodiment, as shown in FIGs. 4 and 5, the inserted part 5 is provided with a root part 10, which is protruded from a surface 8 of a cover main body 6 of the terminal cover 16, and an arm part 13 which is extended from a tip end 12 of the root part 10 along the surface 8 of the cover main body 6 and is spaced apart from the surface 8 at an interval "S".

An interval between a contact surface 18, which is to be contacted with the insertion part 4, of a tip end part 14 of the arm part 13 in an extended direction from the root part 10 and the surface 8 of the cover main body 6 is set to be a dimension that the insertion part 4 is press-fitted to the tip end part 14 of the arm part 13. In the present specification, the phrase "extended direction" in the phrase "tip end part 14 in an extended direction from the root part 10" is, as understood from FIG. 4, a direction intersecting the Y-axis direction and the Z-axis direction and approximately along the X-axis. Specifically, the motor case 11 is formed in a cylindrical shape and thus, the "extended direction" is a direction along the outer periphery 2 in a cylindrical shape.

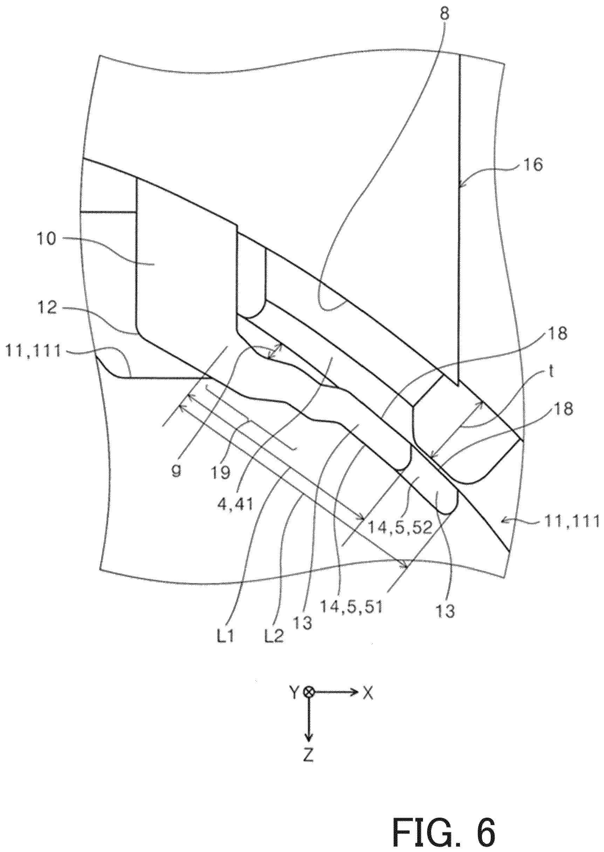

As shown in FIG. 6, a base end part 19 of the arm part 13 connected with the root part 10 is structured so as to face the insertion part 4 with a gap "g". In other words, as shown in FIG. 4, an interval "S1" between the base end part 19 of the arm part 13 and the surface 8 of the terminal cover 16 is set to be larger than an interval "S2" between the tip end part 14 and the surface 8. As a result, the gap "g" (FIG. 6) is formed between the base end part 19 and the surface 8.

In addition, as shown in FIG. 4, the interval "S2" between the contact surface 18 of the arm part 13 and the surface 8 of the cover main body 6 is set to be a dimension that the insertion part 4 is press-fitted. In other words, the interval "S2" is set to be smaller than a thickness "t" of the insertion part 4 (FIG. 6). As shown in FIG. 6, in a state that the insertion part 4 is inserted to the inserted part 5, the tip end part 14 is pushed so that an interval between the contact surface 18 and the surface 8 becomes larger than the interval "S2" and, in this state, the interval is the same as the thickness "t" of the insertion part 4.

Further, as shown in FIGs. 4 and 6, in this embodiment, the base end part 19 of the arm part 13 is formed in a stepped shape having two stages. Therefore, a dimension of the gap "g" is not uniform in the entire length of the base end part 19 and is changed depending on a position. A dimension of the gap "g" is formed so as to be smaller at a position near to the tip end part 14 than a portion near to the root part 10.

In this embodiment, the base end part 19 is structured in a stepped shape having two stages but may have three stages or more. Further, the base end part 19 may be formed with one stage.

In this embodiment, the motor case 11 is structured of a pair of the first case 111 and the second case 112 which is joined and integrated with the first case 11. Further, the insertion part 4 is structured of a first insertion part 41 provided in the first case 111 and a second insertion part 42 provided in the second case 112.

The terminal cover 16 is a single member.

The inserted part 5 is structured of a first inserted part 51 to which the first insertion part 41 is inserted and a second inserted part 52 to which the second insertion part 42 is inserted.

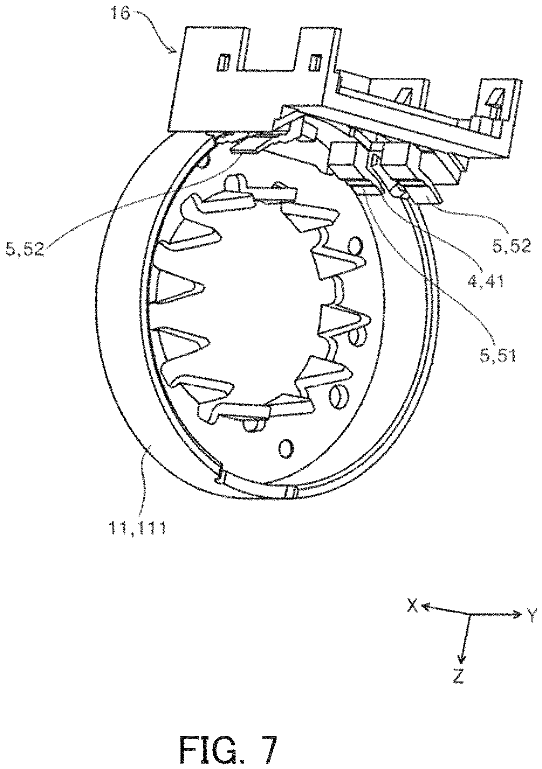

As shown in FIG. 5, the first insertion parts 41 of the first case 111 are inserted to the first inserted parts 51 of the terminal cover 16, which is a single member, in a first direction "D1". As a result, the state shown in FIG. 7 is obtained.

Successively, the second insertion parts 42 of the second case 112 are inserted to the second inserted parts 52 of the terminal cover 16 in a second direction "D2" which is opposite to the first direction "D1". As a result, the motor case 11 and the terminal cover 16 are integrated with each other and the state in FIG. 2 is obtained. The first case 111 and the second case 112 are integrated with each other by welding. In accordance with an embodiment of the present invention, the first case 111 and the second case 112 may be integrated with each other by a screw or the like other than welding.

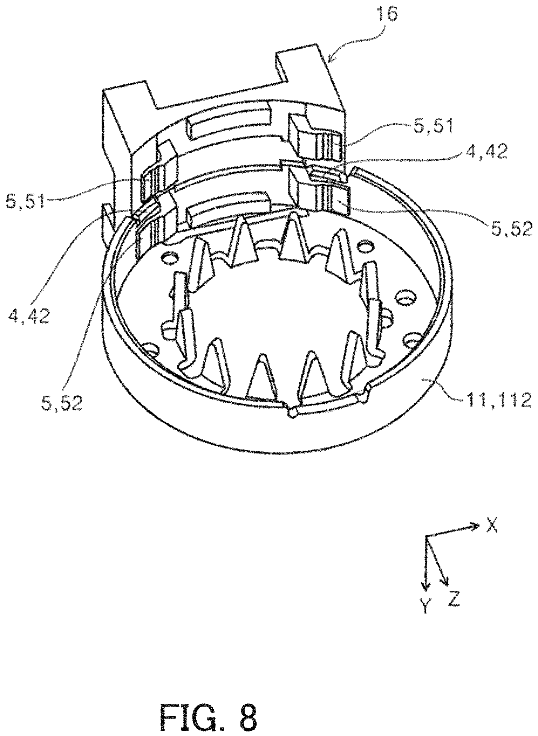

FIG. 8 shows a state that the second insertion parts 42 of the second case 112 are first inserted to the second inserted parts 52 of the terminal cover 16, which is a single member, in the second direction "D2". In this case, successively, the first insertion parts 41 of the first case 111 are inserted to the first inserted parts 51 of the terminal cover 16 in the first direction "D 1".

Further, as shown in FIG. 6, in this embodiment, a length "L1" of the arm part 13 of the first inserted part 51 and a length "L2" of the arm part 13 of the second inserted part 52 are set to be different from each other.

In this embodiment, the second inserted part 52 and the first inserted part 51 are formed so that the length "L2" of the arm part 13 of the second inserted part 52 is longer than the length "L1" of the arm part 13 of the first inserted part 51. Specifically, the lengths of the tip end parts 14 are different from each other, but the lengths of the base end parts 19 are the same as each other.

In other words, the second inserted part 52 and the first inserted part 51 are formed so that the length of the tip end part 14 of the second inserted part 52 is longer than the length of the tip end part 14 of the first inserted part 51. As a result, a surface area of the contact surface 18 of the tip end part 14 of the second inserted part 52 is larger than that of the contact surface 18 of the tip end part 14 of the first inserted part 51.

### <Description of Effects of First Embodiment>

(1) In this embodiment, the terminal cover 16 is attached to the motor case 11 in a state that the insertion part 4 of the motor case 11 is press-fitted to the inserted part 5. In other words, the insertion part 4 is press-fitted to the inserted part 5 and thus, vibration of the motor 1 is not individually transmitted to the inserted part 5 and the insertion part 4, and the inserted part 5 and the insertion part 4 are integrally vibrated and, as a result, a possibility of occurrence of abnormal noise can be reduced. Further, the insertion part 4 is press-fitted to the inserted part 5 and thus, they are firmly contacted with each other by a repulsive force due to press-fitting. As a result, the terminal cover 16 is held by the motor case 11 with less possibility of displacement.
(2) Further, in this embodiment, the arm part 13 is provided with the base end part 19 connected with the root part 10 and the tip end part 14 connected with the base end part 19. Further, in the tip end part 14, although the contact surface 18 is contacted with the insertion part 4 in a press-fitted state, the base end part 19 faces the insertion part 4 with the gap "g", and the base end part 19 and the insertion part 4 are not contacted with each other.

If the base end part 19 is also contacted with the insertion part 4 in a press-fitted state similarly to the tip end part 14, stress due to press-fitting concentrates on a connected portion between the base end part 19 and the root part 10 and the connected portion may be easily damaged. However, in this embodiment, the base end part 19 is not contacted with the insertion part 4 and thus, the stress can be dispersed and relieved to the entire base end part 19. As a result, a possibility of damage of the connected portion between the base end part 19 and the root part 10 can be reduced.

Further, a repulsive force of the arm part 13 due to press-fitting of the insertion part 4 concentrates on the contact surface 18 of the tip end part 14. Therefore, vibration of the motor 1 is not individually transmitted to the inserted part 5 and the insertion part 4 and thus, the inserted part 5 and the insertion part 4 are further integrally vibrated and, as a result, a possibility of occurrence of abnormal noise can be further reduced.

(3) Further, in this embodiment, the base end part 19 is formed in a stepped shape having two stages or more. As a result, stress can be further dispersed and relieved in comparison with a case that the base end part 19 is formed with one stage, and a possibility of damage of the connected portion between the base end part 19 and the root part 10 can be further reduced.

(4) Further, in this embodiment, the first insertion part 41 of the first case 111 is inserted to the first inserted part 51 of the terminal cover 16, which is a single member, in the first direction "D1", and the second insertion part 42 of the second case 112 is inserted to the second inserted part 52 of the terminal cover 16 in the second direction "D2" which is opposite to the first direction "D1" and thereby, the motor case 11 and the terminal cover 16 are integrated with each other. As a result, the first case 111 and the second case 112 can be easily attached to the terminal cover 16 which is a single member. In addition, when the first case 111 and the second case 112 are successively fixed to each other as one body, the terminal cover 16 can be held by the motor case 11 with less possibility of displacement.

(5) Further, in this embodiment, the length "L1" of the arm part 13 of the first inserted part 51 and the length "L2" of the arm part 13 of the second inserted part 52 are different from each other. As a result, a possibility of occurrence of abnormal noise due to vibration of the motor 1 can be further reduced.

While the description above refers to particular embodiments of the present invention, it will be understood that many modifications may be made without departing from the spirit thereof. The accompanying claims are intended to cover such modifications as would fall within the true scope and spirit of the present invention.

The presently disclosed embodiments are therefore to be considered in all respects as illustrative and not restrictive, the scope of the invention being indicated by the appended claims, rather than the foregoing description, and all changes which come within the meaning and range of equivalency of the claims are therefore intended to be embraced therein.

## Claims

1. A motor (1) comprising:
a motor case (11) in a cylindrical shape and in which a rotor (7) and a stator (9) are accommodated;
a terminal cover (16) which is attached to an outer periphery (2) of the motor case (11);
an insertion part (4) which is provided in the motor case (11); and
an inserted part (5) which is provided in the terminal cover (16);
wherein the terminal cover (16) is attached to the motor case (11) in a state that the insertion part (4) of the motor case (11) is press-fitted to the inserted part (5).

2. The motor (1) according to claim 1, wherein
the inserted part (5) comprises:
a root part (10) which is protruded from a surface (8) of a cover main body (6) of the terminal cover (16); and
an arm part (13) which is extended from a tip end of the root part (10) along the surface (8) of the cover main body (6) so as to be spaced apart from the surface (8),
the arm part (13) is provided so that an interval between a contact surface (18), which is a tip end part (14) in an extended direction from the root part (10) and contacts with the insertion part (4), and the surface (8) of the cover main body (6) is set to be a dimension so that the insertion part (4) is press-fitted, and
a base end part (19) of the arm part (13) which is connected with the root part (10) faces the insertion part (4) with a gap (g).

3. The motor (1) according to claim 2, wherein the base end part (19) is formed in a stepped shape having two stages or more.

4. The motor (1) according to one of claims 1 through 3, wherein
the motor case (11) comprises a pair of a first case (111) and a second case (112) which is joined and integrated with the first case (111),
the insertion part (4) comprises a first insertion part (41) provided in the first case and a second insertion part (42) provided in the second case (112),
the terminal cover (16) is a single member,
the inserted part (5) comprises a first inserted part (51) to which the first insertion part (41) is inserted and a second inserted part (52) to which the second insertion part (42) is inserted, and
the first insertion part (41) of the first case (111) is inserted to the first inserted part (51) of the terminal cover (16) which is the single member in a first direction (D1), and the second insertion part (42) of the second case (112) is inserted to the second inserted part (52) of the terminal cover (16) in a second direction (D2) which is opposite to the first direction (D1) and thereby, the motor case (11) and the terminal cover (16) are integrated with each other.

5. The motor (1) according to claim 4, wherein a length of the arm part (13) of the first inserted part (51) and a length of the arm part (13) of the second inserted part (52) are different from each other.
